# EUROPÄISCHE PATENTANMELDUNG

(11) **EP 0 771 063 A1**
(43) Veröffentlichungstag der Anmeldung: **02.05.1997**
(21) Anmeldenummer: 96116744.2
(22) Anmeldetag: 18.10.1996
(51) Int. Cl.: H02M 3/337

(54) **Schaltungsanordnung für einen AC/DC-Konverter mit Potentialtrennung und induktives Bauelement zur Verwendung in einer solchen Schaltungsanordnung**

(30) Priorität: 24.10.1995 DE 19539475; 14.11.1995 DE 19542357
(71) Anmelder: ABB PATENT GmbH, D-68309 Mannheim (DE)
(72) Erfinder: Vollmer, Ludwig, 59609 Anröchte (DE); Weissenburg,Martin, 59519 Welver (DE)
(74) Vertreter: Rupprecht, Klaus, Dipl.-Ing.

(57) **Zusammenfassung**

Die Erfindung bezieht sich auf eine Schaltungsanordnung für einen AC/DC-Konverter mit aufwärtsstellendem bzw. auf- und abwärtsstellendem Gegentaktwandler, wobei vorgeschlagen wird, die Energiespeicherdrosselfunktion und die transformatorische Potentialtrennung bei einem solchen Konverter mit Hilfe eines einzigen induktiven Bauelements zu realisieren. Es wird dazu eine Schaltungsanordnung mit einer magnetischen Verbundeinheit (23) vorgeschlagen, die einen Eisenkern (26, 29, 50) mit einem luftspaltbehafteten magnetischen Kreis (25) zur Realisierung der Energiespeicherfunktion und parallel dazu einen luftspaltlosen magnetischen Kreis (24) zur Realisierung der Transformatorfunktion aufweist. Luftspaltlose Schenkel des Eisenkerns (26, 29, 50) tragen jeweils eine der Primärwicklungen (106 bzw. 107) und eine der Sekundärwicklungen (18.1 bzw. 18.2).

## Beschreibung

Die Erfindung bezieht sich auf eine Schaltungsanordnung für einen AC/DC-Konverter nach dem Oberbegriff des Anspruchs 1. Außerdem bezieht sich die Erfindung auf ein induktives Bauelement zur Verwendung in einer solchen Schaltungsanordnung.

Die Erfindung geht von einer Schaltungsanordnung aus die aus DE-A1 43 19 024 bekannt ist. Die bekannte Schaltung enthält u.a. eine Energiespeicherdrossel mit Mittelanzapfung und einen Transformator zur potentialgetrennten Speisung eines Verbrauchers. Es werden also zwei induktive Bauelemente zur Realisierung der Schaltung benötigt.

Der Erfindung liegt die Aufgabe zugrunde die Schaltung so abzuwandeln bzw. ein geeignetes induktives Bauelement anzugeben, um mit nur einem induktiven Bauelement dieselbe Funktionalität wie bei der bekannten Schaltungsanordnung zu erreichen.

Diese Aufgabe wird durch eine Schaltungsanordnung für einen AC/DC-Konverter nach dem Oberbegriff des Anspruchs 1 durch dessen kennzeichnende Merkmale gelöst. In weiteren Ansprüchen ist eine magnetische Verbundeinheit zur Verwendung in einer solchen Schaltungsanordnung angegeben. Außerdem ist eine Schaltungsvariante für einen auf- und abwärtsstellenden Konverter angegeben einschließlich Ansteuereinrichtung für die Halbleiterschalter des Konverters. Die Ansteuereinrichtung arbeitet mit einer individuellen Stromregelung je Halbleiterschalter, wobei sonst übliche Symmetrieprobleme infolge etwas unterschiedlicher Einschaltdauer der Halbleiterschalter vermieden sind.

Die Erfindung ermöglicht eine kostengünstige und kompakte Realisierung von Schaltnetzteilen. Die magnetische Verbundeinheit kann vorteilhaft in einer Flachbauweise mit jeweils auf einem elektrisch isolierenden Substrat als Wicklungen aufgebrachten spiralförmigen Leiterbahnen realisiert werden, wie beispielsweise in der EP-A1 0522 475 im einzelnen beschrieben ist.

Die Erfindung wird nachstehend anhand der in Zeichnungsfiguren dargestellten Ausführungsbeispiele näher erläutert.

Es zeigen:
- Fig. 1: eine Schaltungsanordnung für einen AC/DC-Konverter nach dem Stand der Technik,
- Fig. 2: die Energiespeicherdrosselanordnung mit transformatorischer Kopplung aus Fig. 1,
- Fig. 3: Abwandlung der Anordnung gemäß Fig. 2,
- Fig. 4: eine symbolische Darstellung des Ersatzschaltbildes gemäß Fig. 3,
- Fig. 5: eine Abwandlung des Transformators aus Fig. 1,
- Fig. 6: eine erfindungsgemäße Abwandlung der in Fig. 1 gezeigten Schaltung,
- Fig. 7, 8, 8a und 8b: Realisierungsvarianten für die in der Schaltung gemäß Fig. 6 enthaltene magnetische Verbundeinheit,
- Fig. 9: Wicklungspaket
- Fig. 10: spiralförmige Leiterbahn,
- Fig. 11: auf- und abwärtsstellender Gegentaktwandler,
- Fig. 12: Schaltungsanordnung zur Ansteuerung der Gegentaktwandler-Transistoren,
- Fig. 13: Ansteuerimpulse für die Transistoren und
- Fig. 14: die Bildung von Synchronisierimpulsen.

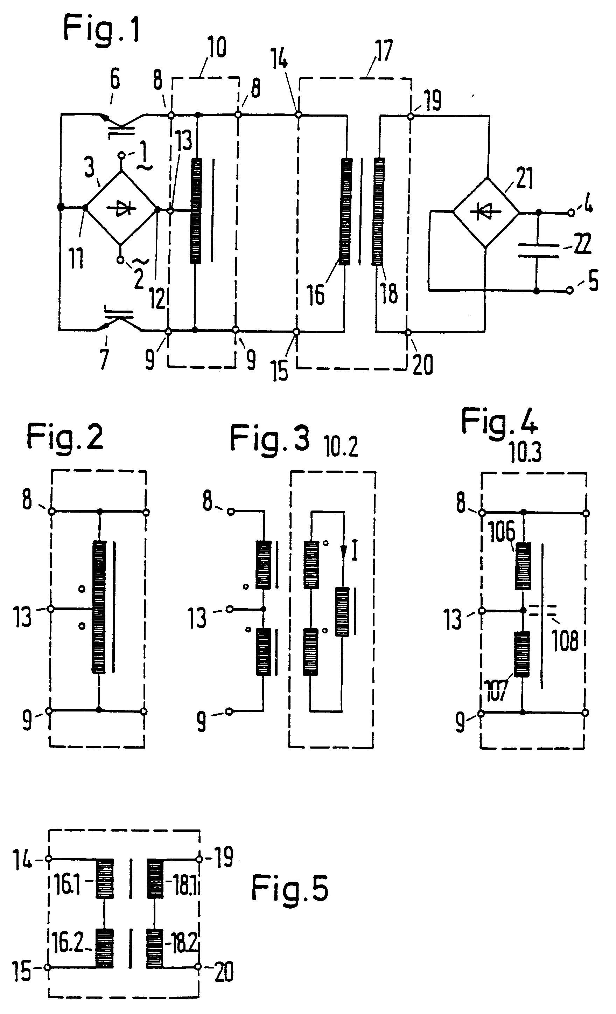

**Fig. 1** zeigt die aus DE-A1 43 19 024 bekannte Schaltungsanordnung für einen AC/DC-Konverter, dessen Betriebsweise dort beschrieben ist. Die Arbeitsweise einer solchen Schaltungsanordnung ist außerdem in der DE-A1-42 38 198 beschrieben. Der Konverter ist geeignet für den Anschluß an eine Wechselspannungsquelle über Wechselspannungsanschlüsse 1, 2 eines Gleichrichters 3. Er ist weiterhin geeignet für die Speisung einer Konstantspannungslast (hier z.B. Magnetrone), die an Ausgangsklemmen 4, 5 anschließbar ist. Der Gleichspannungswandler arbeitet im Gegentaktbetrieb von Transistoren als Halbleiterschalter 6, 7, mit denen äußere Anschlüsse 8, 9 einer Energiespeicherdrosselspule 10 mit einem ersten Gleichspannungsanschluß 11 des Gleichrichters 3 verbunden werden. Der zweite Gleichspannungsanschluß 12 des Gleichrichters 3 ist mit einer Mittelanzapfung 13 der Energiespeicherdrosselspule 10 verbunden.

Die äußeren Drosselspulenanschlüsse 8, 9 sind jeweils mit Anschlüssen 14, 15 der Primärwicklung 16 eines Transformators 17 verbunden. An die Sekundärwicklung 18 des Transformators 17 ist über Anschlüsse 19, 20 ein sekundärseitiger Gleichrichter 21 angeschlossen, dessen Gleichspannungsanschlüsse mit den Ausgangsklemmen 4, 5 und einem dazu parallelgeschalteten Kondensator 22 verbunden sind.

Übereinstimmende Komponenten und Anschlüsse sind in den weiteren Figuren 2 bis 12 in gleicher Weise wie in Fig. 1 bezeichnet.

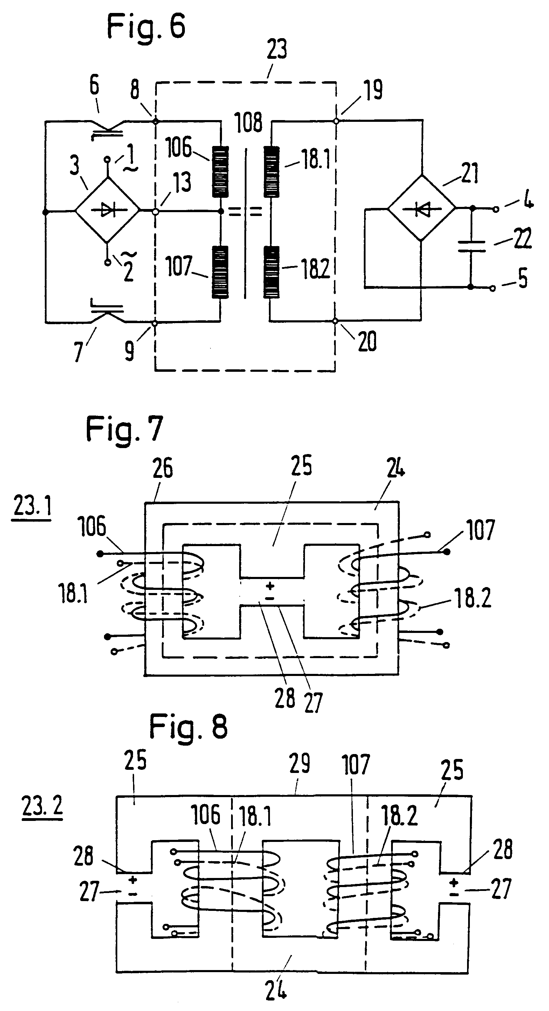

Anhand der Fig. 2 bis 5 werden Schritte zur Umstrukturierung der in Fig. 1 gezeigten Anordnung in die erfindungsgemäße, in Fig. 6 dargestellte Anordnung gezeigt.

**Fig. 2** zeigt die in Fig. 1 enthaltene transformatorisch gekoppelte Energiespeicherdrosselanordnung 10.

**Fig. 3** zeigt eine Abwandlung der in Fig. 2 dargestellten Anordnung in eine Schaltung mit zwei Einzeldrosseln 103, 104 mit magnetischer Kopplung. Mit gestrichelter Umrandung ist ein Ersatzschaltbild 10.2 dazu dargestellt.

**Fig. 4** zeigt eine übliche symbolische Darstellung 10.3 des Ersatzschaltbildes 10.2,. wobei zwei Spulen 106, 107 mit magnetischen Nebenschluß 108 dargestellt sind.

**Fig. 5** zeigt eine Abwandlung 17.1 des Transformators 17 (Fig. 1), wobei zwei Transformatoren vorhanden sind, deren Primärwicklungen 16.1 und 16.2 und Sekundärwicklungen 18.1 und 18.2 jeweils in Reihe geschaltet sind, so daß sich die Teilspannungen addieren.

**Fig. 6** zeigt eine erfindungsgemäße, zur Fig. 1 funktionsgleiche Schaltungsanordnung, bei der die Energiespeicherdrosselspule 10 und der Transformator 17 (Fig. 1) ersetzt sind durch eine magnetische Verbundeinheit 23. Die magnetische Verbundeinheit 23 hat also eine Energiespeicher- und eine Transformatorfunktion. Sie ist gebildet durch Kombination der Energiespeicherdrossel 10.3 gemäß Fig. 4 mit der Sekundärseite des Transformators 7.1 gemäß Fig. 5.

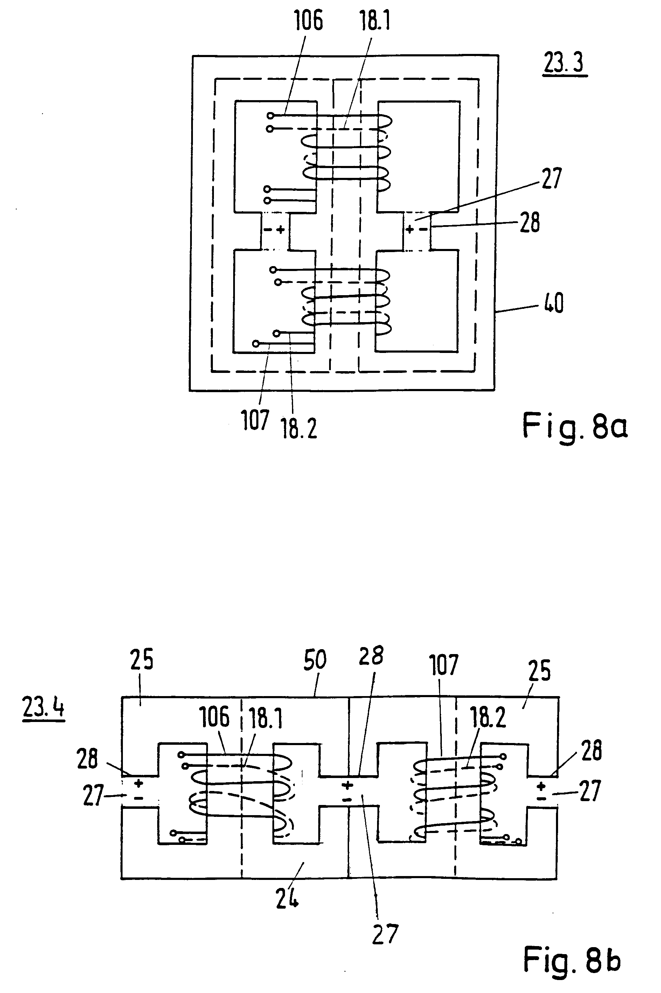

Kennzeichnend für die magnetische Verbundeinheit 23 ist eine Parallelanordnung eines luftspaltlosen magnetischen Kreises (vgl. 24 in Fig. 7, 8 und 8a) für die Transformatorfunktion und wenigstens eines luftspaltbehafteten magnetischen Kreises (vgl. 25 in Fig. 7, 8 und 8a), womit der magnetische Nebenschluß 108 realisiert ist.

Die magnetische Verbundeinheit 23 kann beispielsweise durch eine in **Fig. 7** gezeigte erste Anordnungsvariante 23.1 realisiert werden, wobei ein dreischenkliger Kern 26 im mittleren Schenkel einen Luftspalt 27 aufweist. Der luftspaltbehaftete innere magnetische Speicherinduktivitätskreis 25 kann auch durch einen Permanentmagneten zur Erhöhung des Induktionshubs vorgespannt sein. Der außenliegende transformatorisch-magnetische Kreis 24 verläuft parallel zum luftspaltbehafteten Kreis 25. Die Schenkel des Kerns 26 tragen jeweils eine Primär- und eine Sekundärwicklung 106, 18.1 bzw. 107, 18.2, die elektrisch entsprechend Fig. 6 verschaltet werden.

Eine zweite Anordnungsvariante 23.2 der magnetischen Verbundeinheit ist in **Fig. 8** dargestellt. Sie weist einen vierschenkligen Kern 29 mit je einem Luftspalt 27 in den äußeren Schenkeln auf. Eine magnetische Vorspannung durch einen Permanentmagneten 28 ist auch in diesem Fall möglich. Die Wicklungen 106 und 18.1 bzw. 107 und 18.2 befinden sich auf den inneren Schenkeln und werden entsprechend Fig. 6 elektrisch verschaltet.

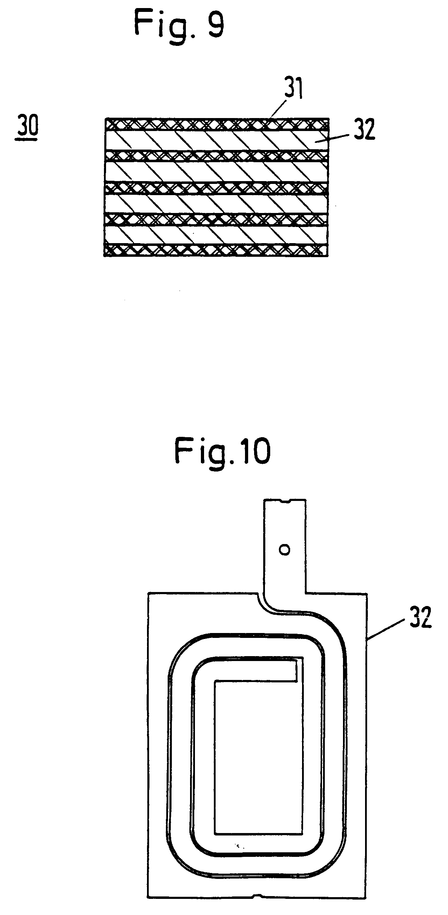

Die zu einem Kern-Schenkel gehörenden Wicklungen 106 und 18.1 bzw. 107 und 18.2 können vorteilhaft als flaches Wicklungspaket ausgeführt werden. In **Fig. 9** ist in einer Prinzipskizze ein Schnitt durch ein Wicklungspaket 30 dargestellt, wobei übereinandergestapelte Isoliermaterialschichten 31 spiralförmige Leiterbahnen 32 tragen. **Fig. 10** zeigt beispielhaft eine spiralförmige Leiterbahn 33.

**Fig. 8a** zeigt eine dritte Anordnungsvariante 23.3 mit einem Kern 40 der magnetischen Verbundeinheit. Sie ist aus der in Fig. 7 gezeigten Anordnung durch Halbierung und Spiegelung der dortigen Verbundeinheit ableitbar.

Die Anordnungen gemäß den Fig. 8 und 8a führen in der Realisierung zu einer etwas kompakteren Verbundeinheit als die Anordnung gemäß Fig. 7. Die Begründung ist dieselbe wie bei bekannten Transformatoren-Gestaltungen mit Doppel-E-Kernen statt Doppel-U-Kernen, nämlich daß die mittlere Weglänge des magnetischen Flusses kürzer ist und der Eisenquerschnitt in den mit Wicklungen versehenen Schenkeln größer ist.

**Fig. 8b** zeigt eine vierte Anordnungsvariante 23.4 der magnetischen Verbundeinheit. Sie hat einen fünfschenkligen Kern 50, wobei der mittlere Schenkel und die beiden äußeren Schenkel jeweils einen Luftspalt 27 aufweisen. Eine magnetische Vorspannung durch jeweils einen Permanentmagneten 28 am Luftspalt 27 ist auch bei dieser Variante möglich. Auch bei der vierten Anordnungsvariante 23.4 befinden sich die Wicklungen 106 und 18.1 bzw. 107 und 18.2 auf den nicht mit einem Luftspalt 27 behafteten Schenkeln.

Die vierte Anordnungsvariante 23.4 (Fig. 8b) hat gegenüber der zweiten Anordnungsvariante 23.2 (Fig. 8) den Vorteil, daß sie unter Verwendung von vier Standard-E-Kernen realisierbar ist. Es ist darauf hinzuweisen, daß die Zeichnungsfiguren nicht maßstäblich sind. Die Querschnittsflächen des oder der Luftspalt-behafteten Schenkel sind in allen Fällen kleiner oder gleich der Summe - typisch 70% der Summe - der Querschnittsflächen der Luftspalt-losen Schenkel. Die Querschnittsflächen der Luftspalt-behafteten Schenkel müssen für die Summe der magnetischen Flüsse in den Luftspalt-losen Schenkeln bemessen sein. Der scheinbar höhere Aufwand der Anordnungen 23.2, 23.3 und 23.4 gegenüber der in Fig. 7 gezeigten Anordnung ist durch eine wesentlich höhere, etwa doppelt so hohe Leistung gerechtfertigt.

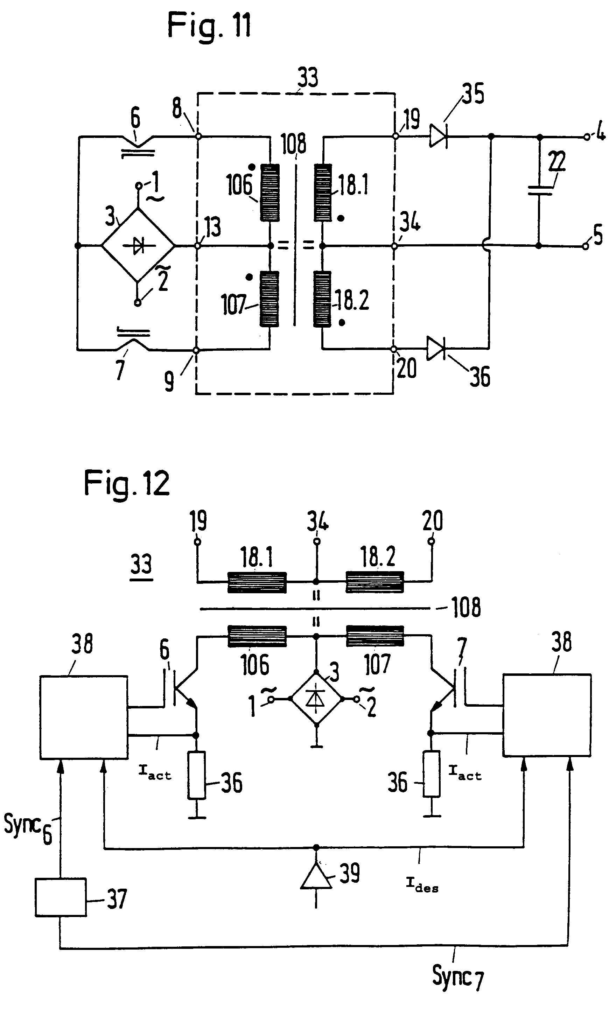

In **Fig. 11** ist eine gegenüber Fig. 6 abgewandelte Schaltungsanordnung dargestellt. Während sich Fig. 6 auf einen nur aufwärtsstellenden Gegentaktwandler bezieht, zeigt Fig. 11 einen auf- und abwärtsstellenden Gegentaktwandler. Die in Fig. 11 gezeigte magnetische Verbundeinheit 33 weist sekundärseitig eine Mittelanzapfung 34 auf; ansonsten stimmt die Verbundeinheit 33 mit der in Fig. 6 gezeigten Verbundeinheit 23 überein, so daß die in den Fig. 7, 8, 8a und 8b gezeigten Strukturen auch für die Verbundeinheit 33 sinngemäß gelten. Die Schaltungsanordnung enthält sekundärseitig in bekannter Weise Gleichrichterdioden 35, 36 und einen Kondensator 22. Die an den Sekundärwicklungen in zeitlichem Versatz entstehenden und gleichgerichteten Spannungen sind parallelgeschaltet, werden also nicht wie im Fall der Fig. 6 addiert.

Die Ansteuerung der Transistoren 6, 7 erfolgt im aufwärtsstellenden Betrieb des Gegentaktwandlers mit überlappender Einschaltzeit.

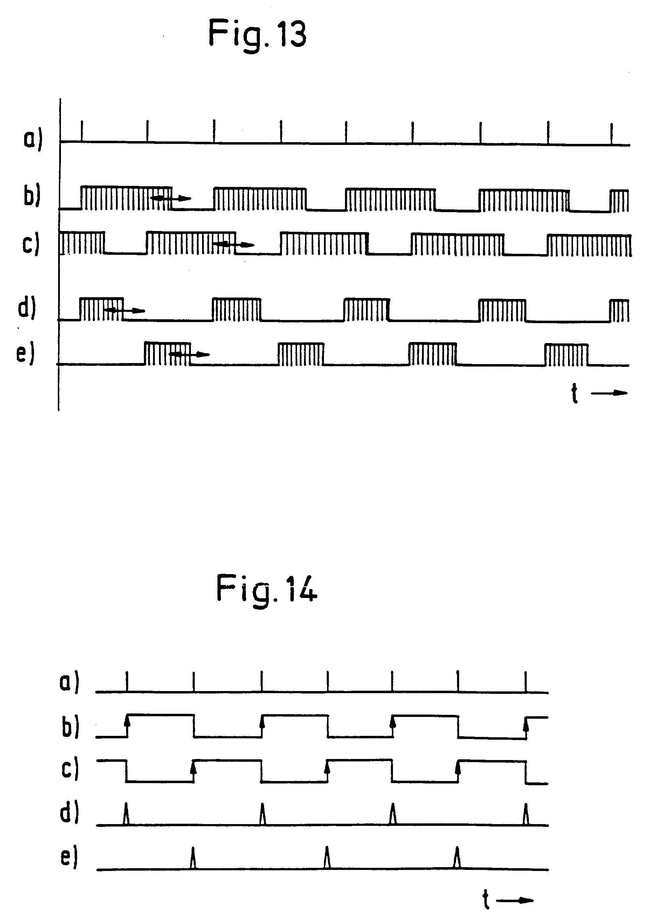

In **Fig. 13** sind unter a) Taktimpulse dargestellt, unter b) Schaltimpulse für den Transistor 6 sowie unter c) Schaltimpulse für den Transistor 7, und zwar für den aufwärtsstellenden Betrieb.

Es ist ein stetiger Übergang der Betriebsweisen vom aufwärtsstellenden in den abwärtsstellenden Betrieb möglich, wobei im abwärtsstellenden Betrieb die Ansteuerimpulse für die Transistoren 6, 7 sich nicht überlappen. Die zugehörigen Ansteuerimpulse sind in Fig. 13 in den Zeilen d) und e) dargestellt.

Die Realisierung von Ansteuerschaltungen, die symmetrische Ansteuersignale für die Transistoren 6, 7 liefern, ist nicht trivial, beispielsweise wegen unterschiedlichen Halbleiterschwellentoleranzen, die zu einem unbefriedigenden Synchronbetrieb, insbesondere zu etwas unterschiedlichen Einschaltdauern der Transistoren führen können. Eine bevorzugte Schaltungsanordnung zur Ansteuerung der Transistoren 6, 7 ist in **Fig. 12** angegeben. Dort ist die zu Fig. 11 korrespondierende Schaltung auf der Primärseite der magnetischen Verbundeinheit 33 angegeben. Die Transistoren 6, 7 werden jeweils durch Ansteuerimpulse aus einer Ansteuerschaltung 38 angesteuert. Die Ansteuerschaltungen 38 werden durch eine Synchronisiereinrichtung 37 synchronisiert. Über einen Verstärker 39 erhalten beide Ansteuerschaltungen 38 den selben Strom-Sollwert Iₛₒₗₗ vorgegeben. Der Strom-Istwert Iᵢₛₜ wird jeweils an einem Shunt 36 abgegriffen. Die Ansteuerschaltungen 38 sind als Stromregler aufzufassen, wobei der Strom durch den Shunt die Regelgröße und die Einschaltdauer der Transistoren 6, 7 bzw. Impulse zur Steuerung der Einschaltdauer die Stellgröße sind. Durch diese Art der Stromregelung werden Unsymmetrien, die sich durch eine nur gesteuerte Ansteuerung der Transistoren ergeben können, kompensiert.

Es versteht sich, daß die von der Synchronisiereinrichtung 37 gelieferten Synchronisierimpulse Sync₆ bzw. Sync₇ entsprechend dem angestrebten Gegentaktbetrieb um 180° versetzt sein müssen. In **Fig. 14** ist dargestellt, wie diese in den Zeilen d) und e) gezeigten, gegeneinander versetzten Synchronisierimpulse gebildet werden können, nämlich durch 2:1-Teilung - wie in den Zeilen b) und c) gezeigt - eines in Zeile a) gezeigten Taktimpulses. Die in den Zeilen d) und e) dargestellten Synchronisierimpulse sind durch Nutzung jeweils der ansteigenden Flanke der b)- bzw. c)-Impulse gebildet. Eine Realisierung der Ansteuerschaltungen 38 kann vorteilhaft unter Anwendung strommodulierter Steuerbausteine erfolgen, die als Current Mode Controller bekannt sind und beispielsweise von der Fa. UNITRODE unter der Bezeichnung UC3842 vertrieben werden.

## Patentansprüche

1. Schaltungsanordnung für einen AC/DC-Konverter mit Konstantspannungslast, ausgeführt als aufwärtsstellender Gegentaktwandler, mit einer Energiespeicherdrossel-Funktion und transformatorischer Potentialtrennung, dadurch gekennzeichnet, daß als einziges induktives Bauelement eine magnetische Verbundeinheit (23, 23.1, 23.2) vorhanden ist, die
a) einen Eisenkern (26, 29) mit einem luftspaltbehafteten magnetischen Kreis (25) zur Realisierung der Energiespeicherfunktion und parallel dazu einen luftspaltlosen magnetischen Kreis (24) zur Realisierung der Transformatorfunktion aufweist,
b) zwei in Reihe geschalteten Primärwicklungen (106, 107) hat, die an ihrer Verbindungsstelle (13) direkt mit dem ersten Pol eines Gleichrichters (3), und an ihren äußeren Anschlüssen (8, 9) über Halbleiterschalter (6, 7) mit dem zweiten Pol des Gleichrichters (3) verbunden sind, und
c) zwei in Reihe geschalteten Sekundärwicklungen (18.1, 18.2) hat, deren äußere Anschlüsse (19, 20) mit einem sekundärseitigen Gleichrichter (21) verbunden sind, wobei
d) jeweils eine Primärwicklung (106 oder 107) zusammen mit einer Sekundärwicklung (18.1 oder 18.2 ) auf einem luftspaltlosen Schenkel des Kerns (26, 29) angeordnet ist.

2. Schaltungsanordnung nach Anspruch 1, dadurch abgewandelt, daß die Schaltung als auf- und abwärtsstellender Gegentaktwandler ausgeführt und durch entsprechende Ansteuerung betrieben ist, wobei in Abwandlung des Merkmals c) die Spannungen der Sekundärwicklungen (18.1, 18.2) einzeln gleichgerichtet und anschließend parallelgeschaltet sind.

3. Magnetische Verbundeinheit zur Verwendung in einer Schaltungsanordnung nach Anspruch 1 oder 2, dadurch gekennzeichnet, daß ein dreischenkliger Kern (26) vorhanden ist, dessen mittlerer Schenkel einen Luftspalt (27) aufweist und auf den äußeren Schenkeln jeweils eine Primärwicklung (106 bzw. 107) und eine Sekundärwicklung (18.1 bzw. 18.2) hat.

4. Magnetische Verbundeinheit zur Verwendung in einer Schaltungsanordnung nach Anspruch 1 oder 2, dadurch gekennzeichnet, daß ein vierschenkliger Kern (29) vorhanden ist, dessen äußere Schenkel jeweils einen Luftspalt (27) aufweisen und dessen innere Schenkel jeweils eine Primärwicklung (106 bzw. 107) und eine Sekundärwicklung (18.1 bzw. 18.2) tragen.

5. Magnetische Verbundeinheit zur Verwendung in einer Schaltungsanordnung nach Anspruch 1 oder 2, dadurch gekennzeichnet, daß ein fünfschenkliger Kern (50) vorhanden ist, dessen mittlerer Schenkel und äußere Schenkel jeweils einen Luftspalt (27) aufweisen und dessen nicht mit einem Luftspalt versehene Schenkel jeweils eine Primärwicklung (106 bzw. 107) und eine Sekundärwicklung (18.1 bzw. 18.2) tragen.

6. Magnetische Verbundeinheit nach einem der Ansprüche 3 bis 5, dadurch gekennzeichnet, daß mittels wenigstens eines Permanentmagneten (28) wenigstens ein luftspaltbehafteter magnetischer Kreis (25) mit permanentmagnetischer Vorspannung gebildet ist.

7. Magnetische Verbundeinheit nach einem der Ansprüche 3 bis 6, dadurch gekennzeichnet, daß jeweils eine Primärwicklung (106 bzw. 107) und eine Sekundärwicklung (18.1 bzw. 18.2) in einer Flachbauweise als Wicklungspaket (30) zusammengefaßt sind, wobei das Wicklungspaket (30) als Stapel mit übereinander geschichteten Isoliermaterialschichten (31) gebildet ist, die jeweils durch spiralförmig darauf angeordneten Leiterbahnen (33) gebildete Wicklungen oder Wicklungsteile tragen.

8. Schaltungsanordnung nach Anspruch 2, dadurch gekennzeichnet, daß zur Ansteuerung der Halbleiterschalter (6, 7) des Gegentaktwandlers je Halbleiterschalter (6 bzw. 7) eine Ansteuerschaltung (38) verwendet ist, wobei
a) beiden Ansteuerschaltungen (38) als Eingangssignale das selbe Stromsollwertsignal (Iₛₒₗₗ), ein Stromistwert-Signal (Iᵢₛₜ₆ bzw. Iᵢₛₜ₇) und ein Synchronisiersignal (Sync₆ bzw. Sync₇) aus einer Synchronisiereinrichtung (37) zugeführt sind, wobei die beiden Synchronisiersignale (Sync₆, Sync₇) gegeneinander um 180° phasenverschoben sind, und
b) die Ansteuerschaltung (38) jeweils als Regeleinrichtung arbeitet, indem sie die Dauer der Einschaltimpulse für den jeweiligen Halbleiterschalter (b bzw. 7) in Abhängigkeit von einer ermittelten Regelabweichung (Iᵢₛₜ-Iₛₒₗₗ) bestimmt.
